**Europäisches Patentamt**

**European Patent Office**

**Office européen des brevets**

(19)

(11) Publication number : **0 484 084 A1**

# (12) EUROPEAN PATENT APPLICATION

(21) Application number : **91309946.1**

(22) Date of filing : **28.10.91**

(51) Int. Cl.⁵ : **E04D 3/36, E04D 5/14, F16B 39/28**

(30) Priority : **29.10.90 US 604459**
**01.08.91 US 739308**

(43) Date of publication of application :
**06.05.92 Bulletin 92/19**

(84) Designated Contracting States :
**AT BE CH DE ES FR GB IT LI LU NL**

(71) Applicant : **ILLINOIS TOOL WORKS, INC.**
**3600 West Lake Avenue**
**Glenview, Illinois 60025-5811 (US)**

(72) Inventor : **Hasan, Syed Riaz-Ul**
**1418 Norman Drive**
**Palatine, Illinois 60067 (US)**
Inventor : **Ditka, Michael P.**
**525 Longfellow**
**Deerfield, Illinois 60015 (US)**

(74) Representative : **Rackham, Stephen Neil et al**
**GILL JENNINGS & EVERY 53-64 Chancery Lane**
**London WC2A 1HN (GB)**

(54) **Roofing fastener and improved screw therefor.**

(57)   A composite fastener (10) comprises of a roofing screw (12) and a roofing washer (14). The screw shank (30) has a leading portion (22), which is threaded, and a locking portion (32). The locking portion (32) has a substantially frusto-conical part (40) adjoining the leading portion (22) and an additional part (42) adjoining the screw head (2). The substantially frusto-conical part (40) defines a major diameter (DL) where it adjoins the additional part (42) and a minor diameter (MD) where it adjoins the leading portion (22). Two locking tabs (60) extend from the substantially frusto-conical part (40), in diametric opposition to each other, in such manner that an imaginary cylinder coaxial with the shank (30) and with a diameter equal to the major diameter divides each tab (60) into a proximal part inside the cylinder and a distal part outside the cylinder. The washer (14) has an aperture (70) with a margin that flexes the tabs (60) to allow the tabs to pass through the aperture (70).

FIG.3

EP 0 484 084 A1

Jouve, 18, rue Saint-Denis, 75001 PARIS

This invention pertains to a fastener comprising a roofing screw and a composite fastener comprising a roofing screw and roofing washer, to which the roofing screw becomes locked, and being useful to fasten a blanket of roofing insulation. A roofing batten is substitutable for the roofing washer.

Soft, poured substrates of gypsum-based materials, which may be over gypsum boards or other boards, or of wood fiber-filled, inorganic, hydraulic cement are used widely in roofing installations. Materials for such substrates of gypsum-based materials, over gypsum boards or other boards, are available commercially from various sources. Materials for such substrates of wood fiber-filled, inorganic, hydraulic cement are available commercially from Tectum, Inc., of Newark, Ohio, under its TECTUM™ trademark.

In fastening blankets of roofing insulation, such as rigid slabs of fibrous insulation or of foamed insulation, to such substrates, possibly with other roofing materials therebetween, fastening assemblies of a type disclosed in Blucher et al. U.S. Patents No. 4,642,012 and No. 4,856,951 are used widely. Such fastening assemblies are available commercially from ITW Buildex (a division of Illinois Tool Works Inc.) of Itasca, Illinois, under its GYPTEC™ trademark.

Typically, as disclosed in each of the aforesaid patents, such a fastening assembly utilizes four separate pieces, namely an elongate screw having threads at one end of its shank and having a head, an anchoring element attached to the threaded end of the screw shank, a washer between the screw head and the anchoring element, and a plate. The plate may be also called a roofing washer. The threaded end of the shank of the screw is threaded into an axial bore of the anchoring element. The anchoring element has external threads designed to be highly resistant to pull-out in a soft substrate. The plate is disposed between the washer and a rigid slab of roofing insulation when the screw is driven so as to drive the anchoring element.

Giannuzzi U.S. Patents No. 4,763,456 and No. 4,892,429 contain similar disclosures of a fastening assembly employing a screw having a generally uniform crest diameter and a progressively tapered root diameter, along with a roofing washer. Bidwell U.S. Patent No. 74,489 discloses a similar screw having a generally uniform crest diameter and a progressively tapered root diameter.

According to a first aspect of this invention a roofing screw comprising a head, a shank, and a tip and being made from a resilient material, the shank extending between the head and the tip and defining an axis, the shank having a leading portion adjoining the tip, the leading portion being threaded to define a maximum crest diameter; is characterised in that the roofing screw also includes a locking portion joined to the leading portion and including at least one locking tab, which in a normal position extends outwards in a radial sense, beyond the maximum crest diameter defined by the leading portion, and which is capable of flexing from the normal position into a flexed position where the locking tab fits within an imaginary cylinder being coaxial with the shank and having a diameter equal approximately to the maximum crest diameter defined by the leading portion.

Preferably the locking portion has a transitional part and an additional part between the transitional part and the head, the transitional part being substantially frusto-conical and defining a major diameter at the additional part and a minor diameter, the transitional part having the at least one locking tab, which in a normal position extends axially towards the head and outwards in a radial sense, beyond the maximum crest diameter and beyond the major diameter, in such manner that an imaginary cylinder coaxial with the shank and having a diameter equal to the major diameter intersects the locking tab to divide the locking tab into a proximal part and a distal part, the locking tab being capable of flexing into a flexed position wherein the locking tab fits within an imaginary cylinder coaxial with the shank and having a diameter substantially equal to the maximum crest diameter, whereby the substantially frusto-conical, transitional part tends to center the roofing screw relative to an aperture of a roofing washer to protect the locking tab against being broken accidentally by being driven against the roofing washer at a margin of the aperture.

Preferably, the transitional part has two such tabs, in diametric opposition to each other. Each locking tab has a distal edge, which is bevelled in such manner that one end of the distal edge is closer to the screw tip, as compared to the other end of the distal edge, and that the closer end leads the other end when the screw is driven. Preferably, whether or not there are two such tabs, the major diameter is at least as large as the maximum crest diameter.

According to a second aspect of this invention a composite fastener comprises a roofing screw in accordance with the first aspect of this invention and, a roofing washer having an aperture, which has a margin configured so as to define means coacting with the roofing screw, when the roofing screw is driven through the roofing washer, by allowing the leading portion to pass through the aperture, by flexing the or each locking tab from the normal position into the flexed position, so that the or each locking tab passes through the aperture when the roofing screw is driven sufficiently for the or each locking portion to extend through the aperture, and by allowing the or each locking tab to flex back towards its normal position when the roofing screw is driven sufficiently for the head to be nearly contiguous with or to bear against the roofing washer.

According to a third aspect of this invention a composite fastener comprises a roofing screw in accordance with the first aspect of this invention and, a roofing batten having an aperture, which has a margin configured so as to define means coacting with the roofing screw, when the roofing screw is driven through the roofing washer, by allowing the leading portion to be thus driven through the aperture, by flexing the or each locking tab from the normal position into the flexed position, such that the or each locking tab can pass through the aperture, when the roofing screw is driven sufficiently for the locking portion to extend through the aperture, and by allowing the or each locking tab to flex back toward the normal position when the roofing screw is driven sufficiently for the head to be nearly contiguous with or to bear against the roofing batten,

whereby the roofing screw becomes locked to the roofing batten, by the or each locking tab, when the roofing screw is driven sufficiently for the head to be nearly contiguous with or to bear against the roofing batten. The composite fasteners are useful to fasten roofing materials to a substrate.

As mentioned above, the substantially frusto-conical, transitional portion tends to center the roofing screw relative to the roofing washer or batten to protect the locking tab against being broken accidentally by being driven against such washer or batten at the margin of the aperture. Additionally, the roofing screw becomes locked to the roofing washer or batten, by the locking tab, when the roofing screw is driven sufficiently for the head to be nearly contiguous with or to bear against the roofing washer or batten.

Particular embodiments of a roofing screw and a composite fastener in accordance with this invention will now be described with reference to the accompanying drawings; in which:-

Figure 1 is a shortened, elevational view of a roofing screw according to this invention;

Figure 2 is an end view of the roofing screw, rotated by one quarter-turn about its axis compared to Figure 1.

Figure 3 is a perspective view taken in axial section through the roofing screw and the roofing washer, as used to fasten a blanket of roofing insulation to a substrate;

Figure 4 is a fragmentary, perspective view of the roofing screw, as seen from its underside;

Figure 5, on a smaller scale, is a fragmentary, sectional view taken along line 5--5 of Figure 3, in a direction indicated by arrows;

Figure 6, on a slightly larger scale, is a sectional view taken along line 6--6 of Figure 5, in a direction indicated by arrows;

Figure 7 is a smaller, perspective view of the roofing washer shown in Figures 1, 3, 5, and 6;

Figure 8, on a larger scale, is a fragmentary, elevational view of certain portions of the roofing screw;

Figure 9 is a sectional view taken along line 9--9 of Figure 8, in a direction indicated by arrows;

Figure 10, on a larger scale, is a view analogous to Figure 6 but taken to show an alternative embodiment, in which a roofing washer having a circular shape is used over a roofing membrane;

Figure 11 is a perspective view of the roofing washer of Figure 10;

Figure 12 is a shortened, side elevation of a second embodiment of roofing screw;

Figure 13 is a fragmentary, perspective view of the second embodiment of roofing screw;

Figure 14 is a fragmentary, perspective view of a composite roofing screw and batten; and,

Figure 15 is scrap fragmentary section through the head of a roofing screw and batten.

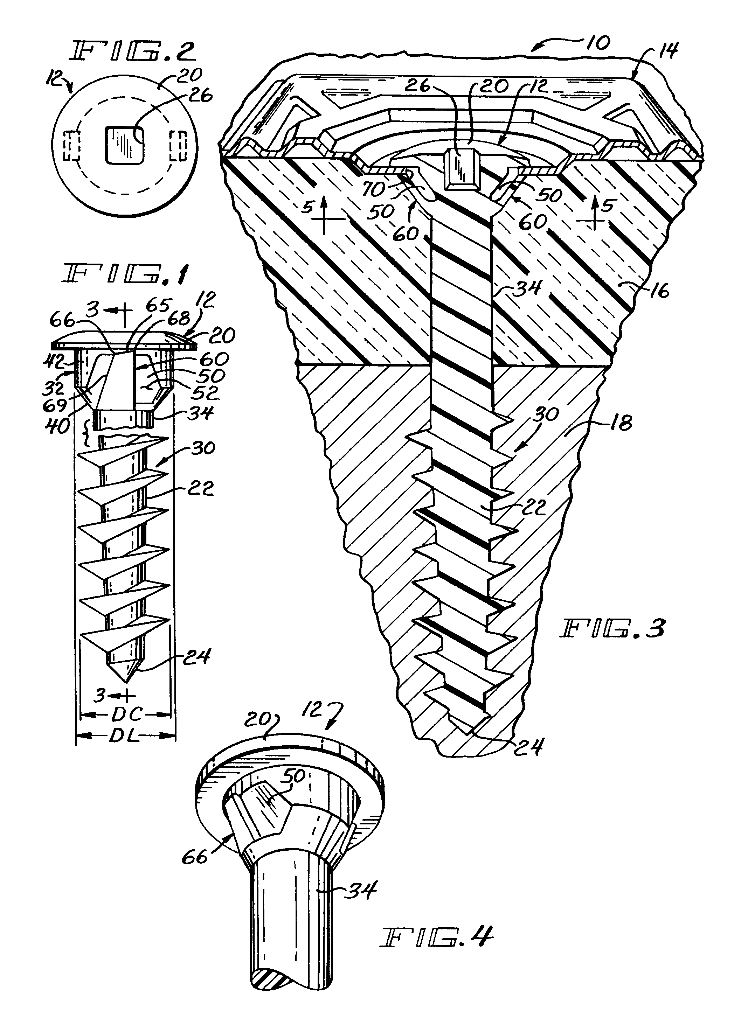

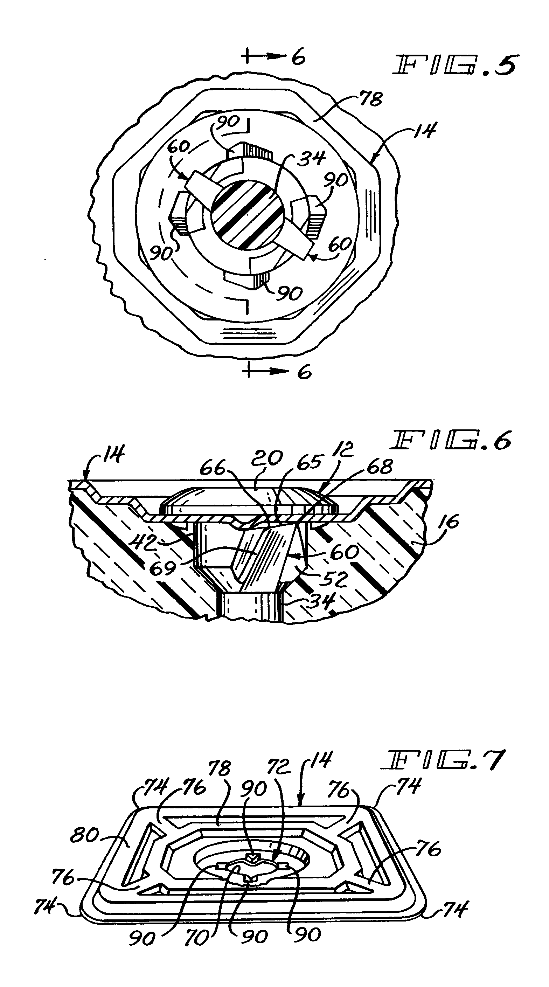

As shown in Figures 1 through 7, a composite fastener 10 constituting a preferred embodiment of this invention is comprised of two pieces, namely a roofing screw 12 having features characteristic of this invention and a roofing washer 14. The composite fastener 10 is shown, in Figure 3, as used to fasten a blanket 16 of roofing insulation to a substrate 18 with possibly other roofing materials (not shown) between the blanket 16 and the substrate 18.

The blanket 16 of roofing insulation may be a rigid slab, as shown, of fibrous insulation or of foamed insulation. The substrate 18 may be a soft substrate, as shown, such as a poured substrate of gypsum-based material, which may be over gypsum board (not shown) or other board, or of wood fiber-filled, inorganic, hydraulic cement.

The screw 12 has a head 20, a shank 22, and a tip 24. The head 20 is formed with a socket 26, which is generally square in cross-section, and which is adapted to coact with a driving tool (not shown) of a known type, such as a screw gun. The tip 24 is pointed, as shown, so as to cut through the blanket 16 of roofing insulation and into the substrate 18 when the screw 12 is driven.

The shank 22 has a leading or threaded portion 30 adjacent to the tip 24, a locking portion 32 adjacent to the head 20, and an unthreaded portion 34 between the threaded portion 30 and the locking portion 32.

The threaded portion 30 is threaded with a right-hand thread having sharp crests and flat roots, as shown, so as to define a maximum crest diameter (DC) which is a uniform crest diameter along substantially all of its axial length, except near the tip 24, and so as to define a root diameter decreasing progressively toward the tip 24 from a maximum root diameter where the threaded portion 30 merges with the unthreaded portion. The unthreaded portion 34 has a uniform diameter equal approximately to the maximum root diameter of the threaded portion 30.

Optimally, as shown in Figure 3, the axial lengths of the respective threaded, unthreaded, and locking portions of the shank 22 are such that the threaded portion 30 becomes embedded fully in the substrate 18 when the composite fastener 10 is used to fasten the blanket 16 of roofing insulation to the substrate 18.

The locking portion 32 has a transitional part 40, which is joined directly to the unthreaded portion 34, and an additional part 42, which is joined directly to the transitional part 40 and to the head 20. The transitional part 40 is substantially frusto-conical, as shown, and defines a major diameter (DL) at the additional part 42 and a minor diameter (DM) at the unthreaded portion 34. The major diameter is at least as large as the maximum crest diameter. Preferably, as shown, the major diameter is equal approximately to the maximum crest diameter. The additional part 42 is substantially cylindrical, as shown, with a diameter coinciding with the major diameter. The unthreaded portion 34 is substantially cylindrical, as shown, with a diameter equal to the minor diameter.

As shown in Figure 8 and elsewhere in the drawings, the locking portion 32 has two diametrically opposed recesses 50. Each recess 50 defines a planar surface 52, which is oriented at an oblique angle relative to the axis defined by the shank 22, and a base surface 54, which is oriented substantially at a right angle relative to the same axis. Moreover, the locking portion 32 has two locking tabs 60, each of which extends from a respective one of the recesses 50.

Each locking tab 60 extends from the base surface 54 of a respective one of the recesses 50, at an oblique angle relative to the axis defined by the shank 22, axially toward the head 20 and outwardly in a radial sense. In a normal position, each locking tab 60 extends beyond the maximum crest diameter and beyond the major diameter, in such manner that an imaginary cylinder being coaxial with the shank 22 and having a diameter equal approximately to the major diameter intersects such locking tab 60 so as to divide such locking tab 60 into a proximal part 62 and a distal part 64. Each locking tab 60 is capable of flexing into a flexed position wherein the locking tab 60 fits within an imaginary cylinder being coaxial with the shank 22 and having a diameter equally approximately to the maximum crest diameter.

The distal part 64 of each locking tab 60 is bevelled in such manner that one end 66 of the distal edge 65 is closer to the tip 24, as compared to the other end 68 of the distal edge 65, and that the closer end 66 leads the other end 68 when the screw is driven. The distal edge 75 is rounded so as to be substantially semi-cylindrical between its opposite ends 66, 68, which are rounded so as to be substantially blunt. Thus, installation torque is decreased, as compared to installation torque for a squared edge (not shown) on each locking tab.

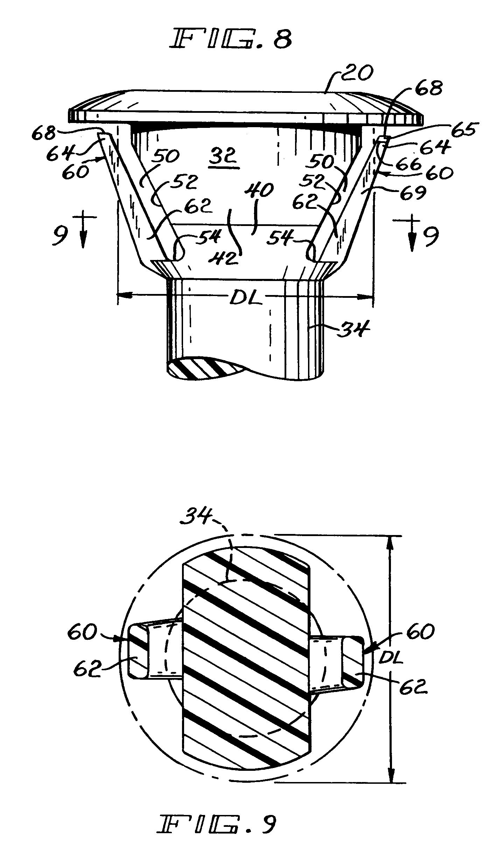

Each locking tab 60 has a leading edge 69 extending at an acute angle (e.g. about 30°) relative to a straight line along an imaginary, right circular cone coaxial with the shank 22, as shown in Figures 1 and 6, in such manner that the proximal part 62 of each locking tab 60 leads the distal part 64 of such locking tab 60 when the roofing screw 12 having a right-hand thread, as noted above, is driven into a substrate.

A preferred material for the screw 12, which can be molded therefrom, is 33% glass reinforced nylon 6/6. The screw 12 may be alternatively machined from a suitable steel, which may be heat-treated (after it has been machine) so as to impart a spring characteristic to the locking tabs 60.

The roofing washer 14, which is similar to known roofing washers except for its rotation-limiting features, is stamped from a sheet of galvanized steel so as to have a circular, central aperture 70, in a countersunk socket 72, so as to be substantially square with rounded corners 74, and so as to have reinforcing ribs including diagonal reinforcing ribs 76, a reinforcing rib 78 surrounding the countersunk socket 72, and a peripheral reinforcing rib 80. The circular, central aperture 70 has a cylindrical margin, which has a diameter larger than the diameter (DL) of the roofing screw 12 where the locking portion 32 meets the head 20 and smaller than the diameter of the head 20.

The roofing washer 14 is deformed near the margin of the circular central aperture 70 to define four rotation-limiting nubs 90 which constitute rotation-limiting features.

The rotation-limiting features, coact with the locking tabs 60 to limit relative rotation of the roofing screw 12 and the roofing washer 14 after the locking tabs 60 have flexed back toward their normal position when the roofing screw 12 has been driven sufficiently for the head 20 to be nearly contiguous with or to bear against the roofing washer 14. As shown in Figure 5, the nubs 90 are spaced regularly (at 90° intervals) around the circular, central aperture 70. Each nub 90 has a bevelled surface 92, which conforms generally to the bevelled, distal edge 65 of each locking tab 60.

In the normal position of each locking tab 60, such locking tab 60 remains spaced from the head 20 by a distance that slightly exceeds the thickness of the roofing washer 14 at the cylindrical margin of the circular, central aperture 70. Moreover, when the locking tabs 60 are in their normal positions, their distal edges 64 span a diametrical distance larger than the diameter of the cylindrical margin of the circular, central aperture 70 of the roofing washer 14. The bevelled, distal edges 64 of the locking tabs 60 coact with the rotation-limiting nubs 90 of the washer 14 so as to lock the screw 12 effectively to the washer 14.

Thus, when the roofing screw 12 is driven through the roofing washer 14, through the blanket 16 of roofing insulation, and into the substrate 18, the roofing screw 12 becomes locked to the roofing washer 14 by the locking tabs 60. The locking tabs 60 flex sufficiently to allow the locking tabs 60 to pass through the circular, central aperture 70, whereupon the locking tabs 60 flex back toward their normal positions so as to prevent the roofing screw 12 from withdrawing accidentally from such aperture 70. After the locking tabs 60 have flexed back toward their normal positions, their distal ends 64 may bear against the underside of the roofing washer 14, as shown in Figure 3. Moreover, the nubs 90 coact with the locking tabs 60 to limit relative rotation of the roofing screw 12 and the roofing washer 14. Each locking tab 60 fits between two nubs 90.

The substantially frusto-conical, transitional part 40 of the locking portion 32 of the roofing screw 12 tends to center the roofing screw 12 relative to the central aperture 70 of the roofing washer 14 when the roofing screw 12 is driven through the roofing washer 14. Advantageously, therefore, the transitional part 40 protects each locking tab 60 against being broken accidentally by being driven against the roofing washer 14 at the cylindrical margin of such aperture 70.

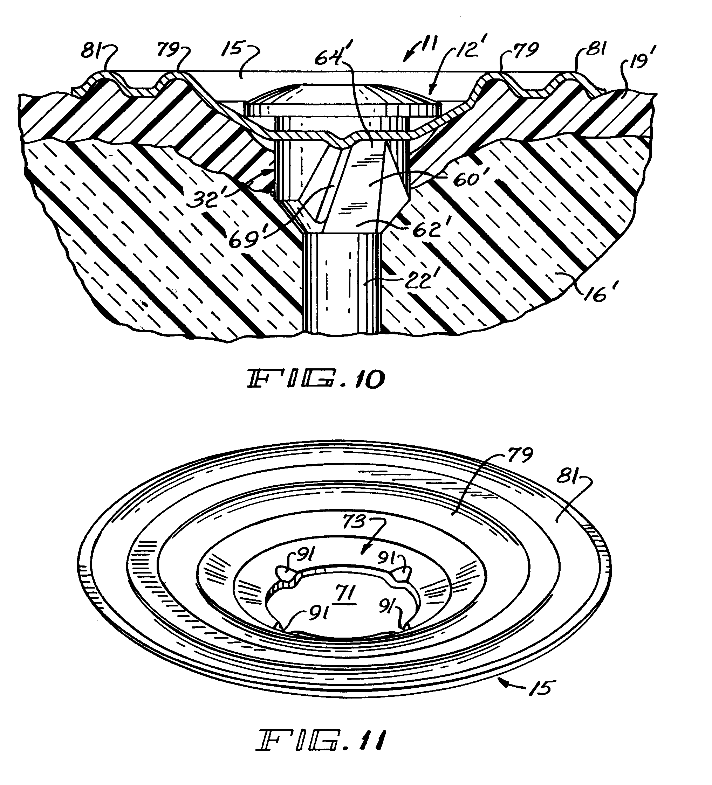

In another embodiment, which is shown in Figure 10, a composite fastener 11 is used to fasten a blanket 16' of roofing insulation to a substrate (not shown) with a roofing membrane 19 overlying the blanket 16', and with possibly other roofing materials (not shown) between the blanket 16' and the substrate. In Figures 10 and 11, primed reference numbers designate elements similar to elements designated by similar, unprimed reference numbers in Figures 1 through 9.

The composite fastener 11 is comprised of two pieces, namely a roofing screw 12' similar to the roofing screw 12 and a roofing washer 15 differing in some respects from the roofing washer 14. The blanket 16' of roofing insulation is similar to the blanket 16 of roofing insulation. The substrate, to which the composite fastener 11 fastens the blanket 16' is similar to the substrate 18. The roofing membrane 19 is a thin, flexible, waterproof sheet of rubber or rubber-like material, as known heretofore. Such a membrane has tends to pucker and to twist, where rubbed thereby, when penetrated by a roofing screw.

Being similar to the roofing screw 12, the roofing screw 12' has two locking tabs 60' (one shown) in diametric opposition to each other, on a locking portion 32' of the roofing screw 12'. Each locking tab 60' has a leading edge 69' extending at an acute angle (e.g. about 30°) relative to a straight line along an imaginary, right circular cone coaxial with the shank 22' of the roofing screw 12', as shown in Figure 10, in such manner that the proximal part 62' of each locking tab 60' leads the distal part 64' of such locking tab 60' when the roofing screw 12' having a right-hand thread (not shown) is driven into a substrate.

The roofing washer 15, which is similar to known roofing washers except for its rotation-limiting features, is stamped from a sheet of galvanized steel so as to have a circular, central aperture 71, in a countersunk socket 73, so as to be substantially circular, and so as to have an annular reinforcing rib 79 surrounding the countersunk socket 73 and a peripheral reinforcing rib 81. The roofing washer 14' has four rotation-limiting nubs 91, which coact with the locking tabs 60' to limit relative rotation of the roofing screw 12' and the roofing washer 15.

Thus, when the roofing screw 12 is driven through the roofing washer 15, through the roofing membrane 19', through the blanket 16' of roofing insulation, and into the substrate 18', the roofing screw 12 becomes locked to the roofing washer 15 by the locking tabs 60'. The locking tabs 60' flex sufficiently to allow the locking tabs 60' to pass through the circular, central aperture 71, whereupon the locking tabs 60' flex back toward their normal positions so as to prevent the roofing screw from withdrawing accidentally from such aperture 71. After the locking tabs 60' have flexed back toward their normal positions, their distal edges 65' may bear against the underside of the roofing washer 15, as shown. If the roofing washer 15 has rotation-limiting nubs similar to the rotation-limiting nubs 90 of the roofing washer 14, such numbs of the roofing washer 15 coact with the locking tabs 60' to limit relative rotation of the roofing screw 12' and the roofing washer 15.

Being inclined at an acute angle, as described above, the leading edge 69' of each locking tab 60' minimizes tendencies of the roofing membrane 19 to pucker or to twist, at such locking tab 60', when the roofing screw 12' penetrates the roofing membrane 19.

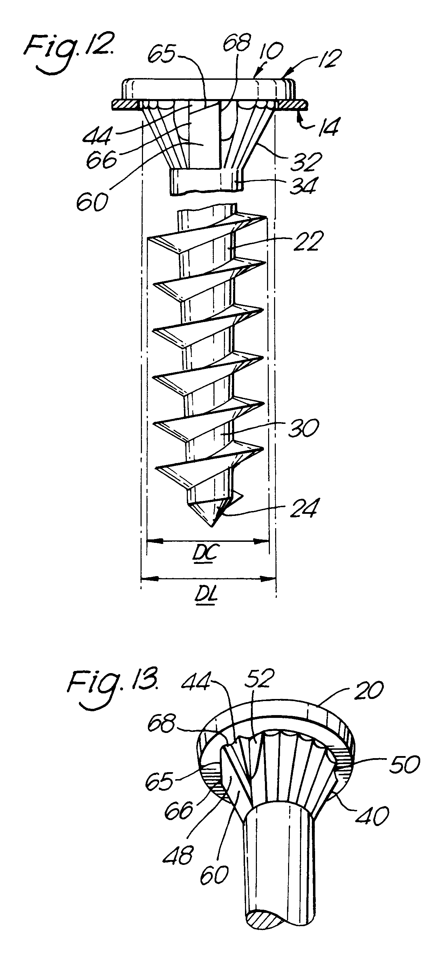

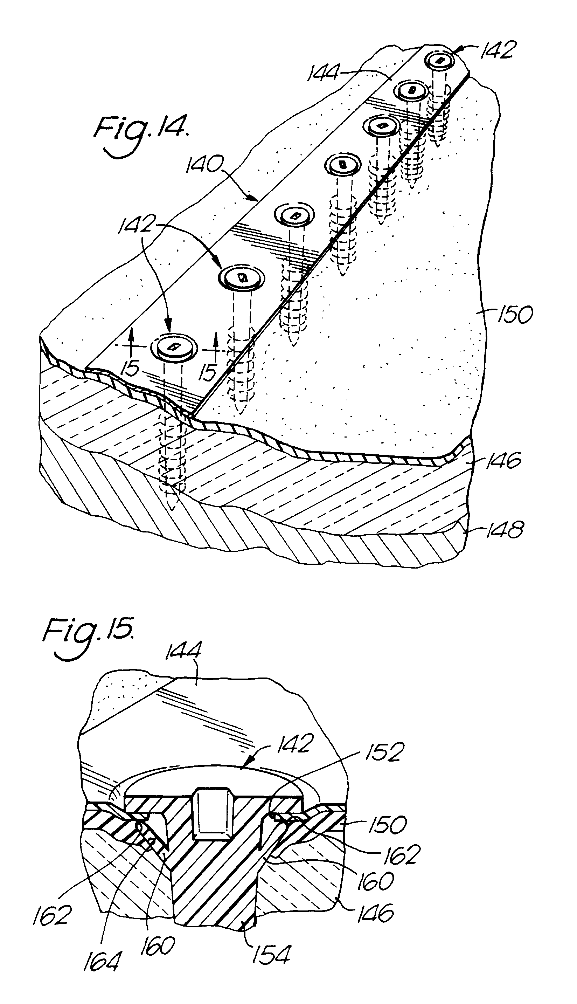

A further embodiment of the roofing screw 12 is shown in Figures 12 and 13. In this embodiment the locking portion 32 has a convexly ribbed surface with a frusto-conical shape, except for two regions 50 in diametric opposition to each other, and except for two locking tabs 60. Each region 50 is defined by two flat surfaces 52 extending axially, in parallel relation to each other, and by a wedge-shaped rib 44 best seen in Figure 13, between the flat surfaces 52 of such region 50.

Each locking tab 60 is elongate and extends outwardly toward the head 20, across one of the regions 50, when such locking tab 60 is unstressed. Each locking tab 60 has a distal end 48 and is capable of flexing inwardly from a normal position into a flexed position. In its normal position, as shown, each locking tab 60 extends beyond the crest diameter defined by the threaded portion 30. In its flexed position, however, each locking tab 40 is flexed toward its respective wedge-shaped rib 44 and fits within an imaginary cylinder, which is coaxial with the shank 22, and which has a diameter not substantially exceeding the crest diameter defined by the threaded portion 30.

As shown in Figures 14 and 15, a composite fastener constituting another alternate embodiment of this invention is comprised of a series of roofing screws 142 similar to the roofing screw 12 and a roofing batten 144. The composite fastener 140 is shown as used to fasten a blanket 146 of roofing insulation to a substrate 148 with a roofing membrane 150 overlying the blanket 146 of roofing insulation, and possibly with other roofing materials (not shown) between the blanket 146 and the substrate 148.

As in the aforenoted embodiments, the blanket 146 of roofing insulation may be a rigid slab of fibrous insulation or of foamed insulation. Likewise, the substrate 148 may be a poured substrate of gypsum-based material or of wood fiber-filled, inorganic, hydraulic cement. As in the alternate embodiment the roofing membrane 150 may be made of synthetic rubber or other material known for making a roofing membrane.

The roofing batten 144 is an elongate strip, which may have preformed, circular apertures 152 (see Figure 15) to accommodate the shanks 154 of the roofing screws. The roofing batten 144 may be made of a polymeric material, such as poly(ethylene terephthalate) or polypropylene. Alternately, the roofing batten 144 may be made of galvanized steel, or another suitable metal.

Being similar to the roofing screw 12, each roofing screw 142 has two locking tabs 160 similar to the locking tabs 60. Each locking tab 160 has a distal edge 162, which is rounded so as to be substantially semicylindrical between its opposite ends and such ends are rounded so as to be substantially blunt. Because the distal edge 162 of each locking tab 120 is rounded so as to be substantially semi-cylindrical, and because its opposite ends are rounded so as to be substantially blunt, the distal edge 162 of each locking tab 160 can rub against the roofing membrane 150 with minimal risk of tearing the roofing membrane 150, and with minimal risk of enlarging such hole 164 (see Figure 15) as such roofing screw 142 punctures in the roofing screw 142 punctures in the roofing membrane 150 when such roofing screw 142 is driven.

Thus, when each roofing screw 142 is driven through the roofing batten 144, through the roofing batten 144, through the roofing membrane 150, through the blanket 146 of roofing insulation, and into the substrate 148, the roofing screw 148 becomes locked to the roofing batten 144 by the locking tabs 160 of such roofing screw 142. Such locking tabs 160 flex sufficiently to allow such locking tabs 160 to pass through the preformed, circular aperture 152 accommodating such roofing screw 142, whereupon such locking tabs 160 flex back toward their normal positions so as to prevent such roofing screw 142 from withdrawing accidentally from such aperture 152. After such locking tabs 160 have flexed back toward their normal positions, their distal edges 162 may bear against the underside of the roofing batten 144, as shown in Figure 5.

The roofing batten 144 includes nubs forming rotation limiting means in exactly the same way as the numbs formed in the roofing washers described above.

## Claims

1. A roofing screw (12) having a head (20), a shank (30), and a tip (24) and being made from a resilient material, the shank (30) extending between the head (20) and the tip (24) and defining an axis, the shank (30) having a leading portion (22) adjoining the tip (24), the leading portion being threaded to define a maximum crest diameter (DC); characterised in that the roofing screw (12) also includes a locking portion (32) joined to the leading portion (22) and including at least one locking tab (60), which in a normal position extends outwards in a radial sense, beyond the maximum crest diameter defined by the leading portion, and which is capable of flexing from the normal position into a flexed position where the locking tab (60) fits within an imaginary cylinder being coaxial with the shank and having a diameter equal approximately to the maximum crest diameter defined by the leading portion (22).

2. A roofing screw according to claim 1, in which the locking portion has a transitional part (40) and an additional part (42) between the transitional part (40) and the head (20), the transitional part (40) being substantially frusto-conical and defining a major diameter (DL) at the additional part and a minor diameter (MD), the transitional part (40) having the at least one locking tab (60), which in a normal position extends axially towards the head and outwards in a radial sense, beyond the maximum crest diameter (DC) and beyond the major diameter (DL), in such manner that an imaginary cylinder coaxial with the shank and having a diameter equal to the major diameter (DL) intersects the locking tab (60) to divide the locking tab (60) into a proximal part and a distal part, the locking tab (60) being capable of flexing into a flexed position wherein the locking tab (60) fits within an imaginary cylinder coaxial with the shank (30) and having a diameter substantially equal to the maximum crest diameter (DC), whereby the substantially frusto-conical, transitional part (40) tends to center the roofing screw (12) relative to an aperture (70) of a roofing washer (14) to protect the locking tab (60) against being broken accidentally by being driven against the roofing washer (14) at a margin of the aperture (70).

3. A roofing screw according to 1 or 2, wherein the transitional part (40) has two tabs (60), in diametric opposition to one another.

4. A roofing screw according to any one of the preceding claims, wherein the or each locking tab (60) has a distal edge (65) with two opposite ends (66,68) and is bevelled in such manner that one end (66) is closer to the tip (24), than the other end (68), and that the one end (66) leads the other end (68) when the screw (12) is driven.

5. A roofing screw according to any one of the preceding claims, wherein the or each locking tab (60) has a leading edge (69), which extends at an acute angle relative to a straight line along an imaginary, right circular cone coaxial with the shank (30).

6. A roofing screw according to any one of the preceding claims, wherein the major diameter (DL) is at least as large as the maximum crest diameter (DC).

7. A composite fastener useful to fasten roofing materials to a substrate comprising:
   (a) a roofing screw in accordance with any one of the preceding claims; and,
   (b) a roofing washer (14,15) having an aperture (70,71), which has a margin configured so as to define means (90,91) coacting with the roofing screw (12), when the roofing screw (12) is driven through the roofing washer (14,15), by allowing the leading portion (22) to pass through the aperture (70,71), by flexing the or each locking tab (60) from the normal position into the flexed position, so that the or each locking tab (60) passes through the aperture (70,71), when the roofing screw (12) is driven sufficiently for the or each locking portion (60) to extend through the aperture (70,71), and by allowing the or each locking tab (60) to flex back towards its normal position when the roofing screw (12) is driven sufficiently for the head (20) to be nearly contiguous with or to bear against the roofing washer (14,15),
   whereby the roofing screw (12) is locked to the roofing washer (14,15), by the or each locking tab (60), when the roofing screw (12) is driven sufficiently for the head (20) to be nearly contiguous with or to bear against the roofing washer (14,15).

8. A composite fastener useful to fasten roofing materials to a substrate comprising:
   (a) a roofing screw in accordance with any one of the preceding claims; and,
   (b) a roofing batten (144) having an aperture (152), which has a margin configured so as to define means coacting with the roofing screw, when the roofing screw is driven through the roofing washer, by allowing the leading portion to be thus driven through the aperture (152), by flexing the or each locking tab (60) from the normal position into the flexed position, such that the or each locking tab (60) can pass through the aperture (152), when the roofing screw is driven sufficiently for the locking portion (42) to extend through the aperture (152), and by allowing the or each locking tab (60) to flex back toward the normal position when the roofing screw is driven sufficiently for the head (20) to be nearly contiguous with or to bear against the roofing batten (144),
   whereby the roofing screw (12) becomes locked to the roofing batten (144), by the or each locking tab (60), when the roofing screw (12) is driven sufficiently for the head (20) to be nearly contiguous with or to bear against the roofing batten (144).

9. A composite fastener according to claim 7 or 8, wherein the roofing washer (14,15) or batten (14) has four rotation-limiting means (90) spaced regularly around the or each aperture (70,71,152), the rotation-limiting means (90) coacting with the locking tabs (60) to limit relative rotation of the roofing screw (12) and the roofing washer (14,15) or batten (144) after each locking tab (60) has flexed back toward the normal position of such locking tab when the roofing screw (12) has been driven sufficiently for the head (20) to be nearly contiguous with or to bear against the roofing washer (14,15) or batten (144).

10. A composite fastener according to claim 9, wherein the roofing washer (14,15) or batten comprises sheet metal, which is deformed so as to define four diametrically opposed nubs (90) constituting said rotation-limiting means.

FIG.2

FIG.1

FIG.3

FIG.4

FIG.5

FIG.6

FIG.7

FIG. 8

FIG. 9

FIG.10

FIG.11

Fig.12.

Fig.13.

Fig.14.

Fig.15.

**European Patent Office**

# EUROPEAN SEARCH REPORT

Application Number

EP 91 30 9946

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 208 417 (L. N. GIANNUZZI) | 1,3,6 | E04D3/36 |
| A | | 2,4,5, | E04D5/14 |
| | | 7-10 | F16B39/28 |
| | * page 8, line 7 – page 9, line 21; figures 1-7 * | | |
| D | & US-A-4 892 429 | | |
| D | & US-A-4 763 456 | | |
| | --- | | |
| Y | DE-A-3 604 767 (M.HELFRECHT) | 1,3,6 | |
| A | | 2,4,5 | |
| | * column 2, line 41 – column 3, line 30; figure * | | |
| | --- | | |
| A | GB-A-2 142 108 (SFS STADLER AG) | 1,2,7 | |
| | * page 3, line 68 – line 94; figures 3,6,20,21 * | | |
| | --- | | |
| A | FR-A-2 558 903 (ELCO IND.) | 1,7 | |
| | * claim 1; figures 1-3 * | | |
| | --- | | |
| A | FR-A-1 488 708 (TEXTRON IND.) | 1,7 | |
| | * column 1, line 1 – line 36; figures * | | TECHNICAL FIELDS SEARCHED (Int. Cl.5) |
| | ----- | | E04D |
| | | | F16B |

The present search report has been drawn up for all claims

| Place of search | Date of completion of the search | Examiner |
|---|---|---|
| THE HAGUE | 07 FEBRUARY 1992 | RIGHETTI R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document